# EUROPÄISCHE PATENTSCHRIFT

(11) **EP 2 014 539 B1**
(45) Veröffentlichungstag und Bekanntmachung des Hinweises auf die Patenterteilung: **21.07.2010**
(21) Anmeldenummer: 08009438.6
(22) Anmeldetag: 23.05.2008
(51) Int. Cl.: B62D 25/02, B62D 25/20, B62D 21/15

(54) **Kraftfahrzeugkarosserie mit seitlichen Schwellern**
Motor vehicle body with side sills
Carrosserie de véhicule automobile dotée de longerons latéraux

(30) Priorität: 11.07.2007 DE 102007032244
(43) Veröffentlichungstag der Anmeldung: 14.01.2009
(73) Patentinhaber: Dr. Ing. h.c. F. Porsche AG, 70435 Stuttgart (DE)
(72) Erfinder: Oggianu, Roberto, 71229 Leonberg (DE); Neumann, Wolfgang, 71735 Eberdingen (DE); Walter, Siegfried, 71229 Leonberg (DE); Schilling, Mario, 71732 Tamm (DE)

(56) Entgegenhaltungen:
- EP-A- 0 825 096
- WO-A-2007/138839
- DE-A1- 19 528 874
- DE-A1-102005 038 463
- JP-A- 1 018 784
- JP-A- 4 081 371
- JP-A- 2006 218 987
- US-A1- 2004 075 265

## Beschreibung

Die Erfindung betrifft eine Kraftfahrzeugkarosserie mit einem seitlichen Schweller.

Der Schweller eines Kraftfahrzeugs ist ein wesentliches Trag- und Stützelement einer Tragstruktur eines Kraftfahrzeugs. Insbesondere soll der Schweller eine stabile Barriere bei einem Seitencrash gegen eine Eindrückung der Fahrgastzelle darstellen. Nach dem Stand der Technik wird der Schweller mit Verstärkungselementen versehen, um die Steifigkeit des Schwellers zu erhöhen.

Aus der DE 195 28 874 C2 ist ein Türschweller mit einer Außenschale und einer Innenschale sowie einem Stegblech bekannt. Letzteres unterteilt den nach Art eines Hohlprofilträgers ausgebildeten Türschweller in eine erste Hohlkammer und eine zweite Hohlkammer. Als Verstärkungsmittel zur Übertragung einer Aufprallkraft ist eine Profilanordnung vorgesehen, deren wesentliche Elemente ein sich längs erstreckendes Profilteil und ein Distanzprofilteil sind. Diese bilden mit dem Stegblech zusammen einen Bauteilverbund und können gegebenenfalls mit wenigstens einer der beiden Schalen des Türschwellers verbunden sein. Sowohl das Profilteil als auch das Distanzprofilteil sind hut- oder hornartig ausgebildet und weisen flächig ausgebildete Krafteinleitungsbereiche auf, die entweder mit den umgebenen Blechschalen direkt verbunden sind oder zu diesen nur einen geringfügigen Abstand aufweisen.

Aus der DE 100 28 716 B4 ist ein Seitenschweller mit einem geschlossenen Querschnitt bekannt, der durch ein Karosserieseitenteilblech und ein Seitenschwellerblech gebildet ist. Innerhalb des geschlossenen Querschnitts befinden sich eine äußere Seitenschwellerverstärkung und eine innere Seitenschwellerverstärkung.

Die JP 04 081371 A offenbart eine Kraftfahrzeugkarosserie mit einem seitlichen Schweller, der sich aus einem Blechinnenteil, einem Blechaußenteil und einem zwischen dem Blechinnenteil und dem Blechaußenteil angeordneten Verstärkungsteil zusammensetzt. Da durch eine vertikale ebene Wand gebildete Verstärkungsteil ist jeweils mit dem oberen und unteren Ende des Blechinnenteiles und des Blechaußenteiles fest verbunden und unterteilt den Schweller in eine äußere und eine innere Hohlkammer. Zur Übertragung von seitlichen Aufprallkräften sind in beiden Hohlkammern Prallelemente vorgesehen, die am plattenförmigen Verstärkungsteil befestigt sind. Das äußere Prallelement verläuft über einen wesentlichen Teil seiner Höhenerstreckung mit Abstand zum angrenzenden Blechaußenteil.

Bei der EP 0 825 096 A wird der Schweller durch einen Blechinnenteil, ein Blechaußenteil und ein profiliertes Verstärkungsteil gebildet. Das profilierte Verstärkungsteil erstreckt sich über die gesamte Höhe des Schwellers und ist jeweils mit oberen und unteren abgestellten Flanschen des Blechinnenteils und des Blechaußenteils verbunden. Ein Prallelement zur Übertragung von seitlichen Aufprallkräften ist zwischen dem profilierten Verstärkungsteil und dem Blechinnenteil vorgesehen, nicht jedoch zwischen dem Blechaußenteil und dem Verstärkungsteil.

Gemäß der JP 2006-218987 A ist das profilierte Verstärkungsblech des Schwellers ebenfalls mit oberen und unteren abgestellten Flanschen des Blechinnenteils und des Blechaußenteiles verbunden und im Bereich eines bodenseitigen Querträgers ist zwischen dem Verstärkungsblech und dem Blechinnenteil des Schwellers ein Prallelement zur Übertragung von seitlichen Aufprallkräften angeordnet. Dieses Prallelement ist mit dem profilierten Verstärkungsblech verbunden und verläuft mit Abstand zum Blechinnenteil.

Die JP 01018784 A zeigt einen Schweller einer Kraftfahrzeugkarosserie, wobei innerhalb des aus einem Blechaußenteil und einem Blechinnenteil bestehenden Schwellers ein langgestrecktes Versteifungsrohr angeordnet ist, das über örtliche Knotenbleche mit dem Blechinnenteil und dem Blechaußenteil verbunden ist.

Die DE102005038463 A zeigt eine Kraftfahrzeugkarosserie mit einem seitlichen Schweller bestehend aus einem Blechinnenteil und einem mit diesem verbundenen, nach außen abstehenden Blechaußenteil und einem zwischen dem Blechinnenteil und dem Blechaußenteil angeordneten Verstärkungsteil. Das obere und untere Ende des Blechinnenteils ist mit dem oberen und unteren Ende des Blechaußenteils verbunden und das Verstärkungsteil weist in Fahrzeuglängsrichtung einen im Wesentlichen U-förmigen Querschnitt auf, wobei die freien Enden des Verstärkungsteiles mit Füßen versehen sind, die beabstandet vom oberen und unteren Ende des Blechinnenteils bzw. des Blechaußenteiles mit dem Blechinnenteil verbunden sind.

Die vorliegende Erfindung beschäftigt sich mit dem Problem, eine Kraftfahrzeugkarosserie mit einem seitlichen Schweller bereitzustellen, bei dem ein verbesserter Schutz gegenüber Aufprallkräften von der Seite gewährleistet wird.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Kraftfahrzeugkarosserie mit einem seitlichen Schweller bereitzustellen, wobei zwischen einem Blechinnenteil und einem Blechaußenteil des Schwellers ein Verstärkungsteil angeordnet ist, wobei sich der seitliche Schweller und das Verstärkungsteil zwischen einer A-Säule und einer C-Säule erstrecken, und zwischen dem Blechaußenteil und dem Verstärkungsteil zur Übertragung von seitlichen Aufprallkräften mindestens ein Prallelement vorgesehen ist, dessen Außenkontur der Kontur des Blechaußenteils angepasst ist.

Durch die Anpassung der Prallelementaußenkontur an die Kontur des Blechaußenteils wird eine verbesserte Übertragung von seitlichen Aufprallkräften erzielt.

Gemäß einer bevorzugten Ausgestaltung der erfindungsgemäßen Kraftfahrzeugkarosserie ist ein Prallelement zwischen der A-Säule und einer B-Säule angeordnet und ein weiteres Prallelement ist zwischen der B-Säule und der C-Säule angeordnet. Hierdurch kann der Schweller in kritischen Stellen verstärkt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: die Beziehung zwischen dem Blechinnenteil und dem Verstärkungsteil in einer perspektivischen Ansicht nach einem Ausführungsbeispiel der Erfindung,
- Fig. 2: die Beziehung zwischen dem Blechinnenteil und anderen Bauteilen in einer perspektivischen Ansicht nach einem Ausführungsbeispiel der Erfindung,
- Fig. 3: ein Querschnitt an einer Stelle in Längsrichtung durch einen Schweller nach einem Ausführungsbeispiel der Erfindung,
- Fig. 4: die Beziehung zwischen dem Blechaußenteil und einem Prallelement im Querschnitt nach einem Ausführungsbeispiel der Erfindung,
- Fig. 5: in einer perspektivischen Ansicht ein Prallelement in einem Schweller nach einem Ausführungsbeispiel der Erfindung,
- Fig. 6: im Querschnitt die Beziehung zwischen einem Vorderprallelement und anderen Elementen im Schweller nach einem Ausführungsbeispiel der Erfindung,
- Fig. 7: im Querschnitt die Beziehung zwischen einem Abschottelement und anderen Elementen im Schweller nach einem Ausführungsbeispiel der Erfindung,
- Fig. 8: einen Querschnitt durch den Schweller an einer B-Säule nach einem Ausführungsbeispiel der Erfindung.

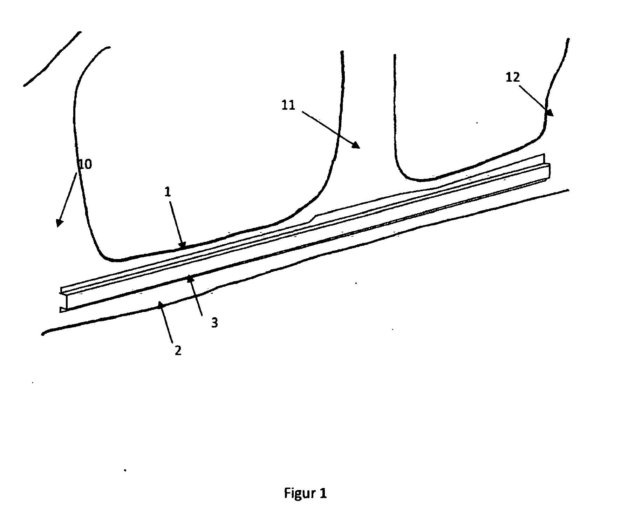

In Figur 1 ist ein Seitenschweller, der auf der rechten bzw. der linken Seite einer Kraftfahrzeugkarosserie vorgesehen ist, mit 1 bezeichnet. An der Vorderseite des Seitenschwellers 1 ragt aus diesem eine A-Säule 10 nach oben. Etwa in der Mitte des Seitenschwellers 1 ragt aus diesem eine mittlere B-Säule 11 nach oben und an dem Ende des Seitenschwellers 1 ragt aus diesem eine C-Säule 12 nach oben.

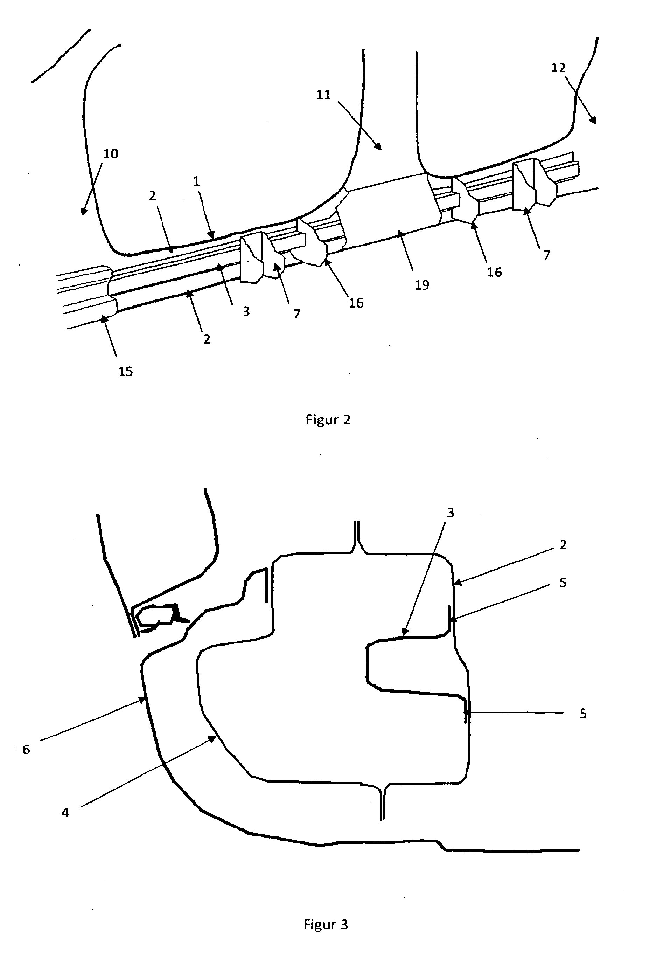

Der Schweller 1 besteht im Wesentlichen aus einem Blechinnenteil 2 und einem mit diesem verbundenen, nach außen abstehenden Blechaußenteil 4 (vgl. z.B. Fig. 3), wobei nach außen, von den Fahrzeuginsassen wegweisend, bedeutet. Das Blechaußenteil 4 und andere Bauteile sind in Figur 1 zu Gunsten einer verbesserten Übersichtlichkeit weggelassen.

Das obere und das untere Ende des Blechinnenteils 2 können auf bekannte Weise jeweils mit dem oberen und dem unteren Ende des Blechaußenteils 4 verbunden werden.

Zwischen dem Blechinnenteil 2 und dem Blechaußenteil 4 ist ein Verstärkungsteil 3 angeordnet, das ein sich in Fahrzeuglängsrichtung erstreckendes im Wesentlichen U-förmiges Profil aufweist, was aus der Figur 3 ersichtlich ist. Die freien Enden des Verstärkungsteils 3 sind mit Füßen 5 versehen, die durch eine bekannte Verbindungstechnik, wie Schweißen, Verkleben oder Nieten, mit dem Blechinnenteil 2 verbunden sind. Vorzugsweise sind die Füßen 5 an dem Blechinnenteil 2 durch Punktschweißen befestigt.

Das Verstärkungsteil 3 erstreckt von einem Bereich zwischen der A-Säule 10 und der B-Säule 11 zu einem Bereich zwischen der B-Säule 11 und der C-Säule 12. Vorzugsweise erstreckt das Verstärkungsteil 3 von der A-Säule 10 bis zu der C-Säule 12.

Das Verstärkungsteil 3 kann aus einem Blechteil gefertigt werden und kann auch in einem kostengünstigen Massenverfahren beispielsweise durch Walzprofilierung oder durch Strangpressprofilierung hergestellt werden. Als Material für das Verstärkungsteil 3 können sowohl Stahlwerkstoffe als auch Leichtmetallwerkstoffe, insbesondere Aluminium verwendet werden.

Das Blechaußenteil 4 ist zwischen einer Kunststoffblende 6 und dem Blechinnenteil 2 angeordnet und die Kunststoffblende 6 erstreckt sich von einem oberen Beriech des Blechaußenteils 4 bis zum untenliegenden Rand des Blechinnenteils 2 und kann mit diesem z.B. durch eine Klemm- oder Schnappwirkung lösbar verbunden sein. Die Kunststoffblende 6 kann am obenliegenden Rand des Blechaußenteils 4 oder des Blechinnenteils 2 mit diesem verclipst sein.

An mindestens einer Stelle in Längsrichtung des Schwellers 1 ist ein Prallelement 7, 15 zwischen dem Blechaußenteil 4 und dem Verstärkungsteil 3 zur Übertragung von seitlichen Aufprallkräften angeordnet. In Figur 2 wird ein mittiges Prallelement 7 zwischen der A-Säule 10 und der B-Säule 11 und ein mittiges Prallelement 7 zwischen der B-Säule 11 und der C-Säule 12 gezeigt. Es kann aber mehr als zwei oder nur ein mittiges Prallelement 7 vorgesehen werden.

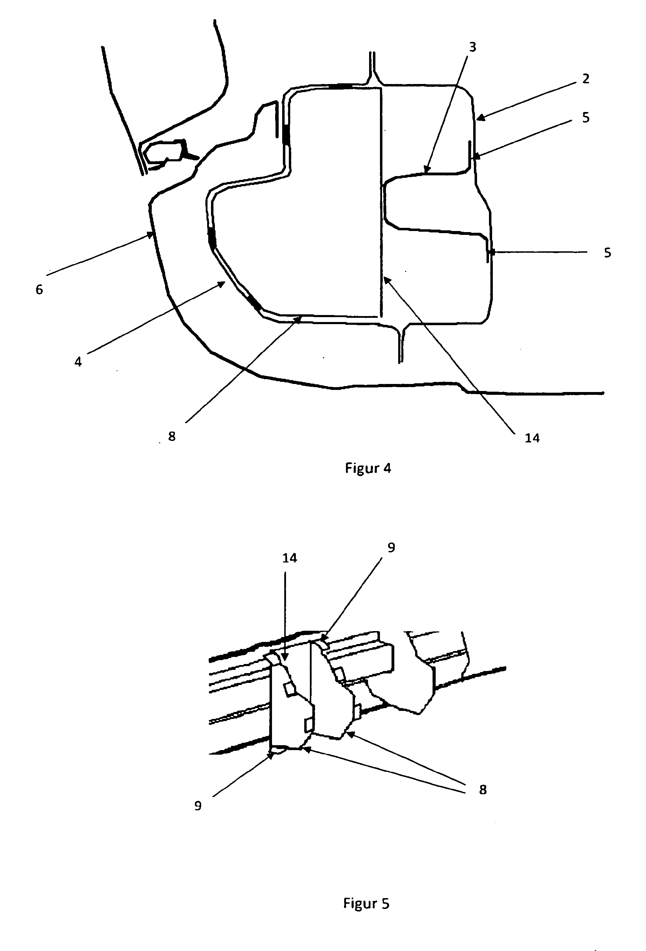

Die Prallelemente 7 weisen einen im Wesentlichen U-förmigen Querschnitt auf und sind im Wesentlichen vertikal ausgerichtet d.h. die Längsachse des U-förmigen Profils liegt quer zur Fahrzeuglängsrichtung. Die Außenkontur des Prallelements 7 ist der Kontur des Blechaußenteils 4 angepasst, wie aus der Figur 4 ersichtlich ist. Aus der Figur 5 ist ersichtlich, dass die freien Enden 8 der gegenüberliegenden Wände des U-förmigen Querschnitts des Prallelements 7 eine Kontur aufweisen, die der Kontur des Blechaußenteils 4 angepasst ist. Dabei sind die mittigen Prallelemente so ausgebildet, eine von der Fahrzeugseite her einwirkende Aufprallkraft zu übertragen.

Des Weiteren weisen die gegenüberliegenden Wände des U-förmigen Querschnitts des Prallelements 7 jeweils mindestens einen zu der jeweiligen Wand lotrechten Fuß 9 auf, der durch Schweißen, Verkleben oder Nieten oder ähnlichen, mit dem Blechaußenteil 4 verbunden sein kann. Der Bodenteil 14 des U-förmigen Querschnitts des Prallelements 7 liegt an dem Verstärkungsteil 3 an, wie aus der Figur 5 ersichtlich ist.

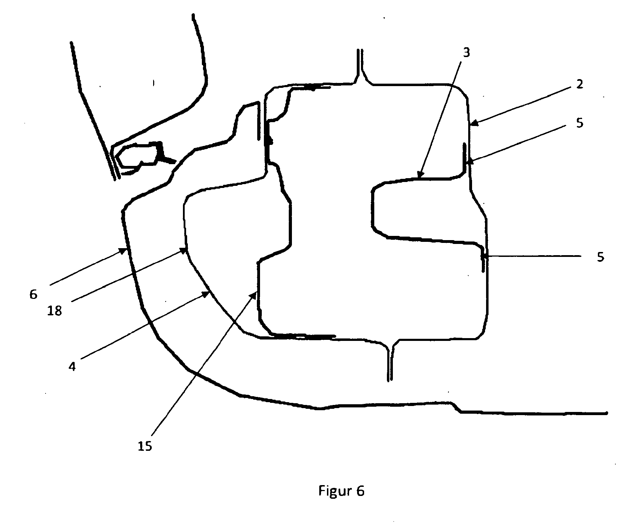

In der in Figur 2 gezeigten Fahrzeugkarosserie ist ein mittiges Prallelement 7 in Längsrichtung des Schwellers 1 zwischen einem Vorderprallelement 15 und einem Abschottelement 16 angeordnet. Das Vorderprallelement 15 ist im Bereich der A-Säule 10 und zwischen dem Blechaußenteil 4, oder dem Fuß 18 der A-Säule, und dem Verstärkungsteil 3 angeordnet. In vorteilhafter Ausgestaltung ist das Vorderprallelement 15 zum Blechaußenteil 4 oder zum Fuß der A-Säule 10 beabstandet angeordnet, wie aus der Figur 6 ersichtlich ist. Des Weiteren erstreckt sich das Vorderprallelement 15 zwischen der A-Säule 10 und dem Verstärkungsteil 3 bis hin zu einer Gehäusewand (nicht gezeigt) eines Radkastens (nicht gezeigt). Das Vorderprallelement 15 ist ausgebildet, eine von einer Fahrzeugvorderseite her einwirkende Aufprallkraft, z.B. von einem Rad, zu übertragen. Das Vorderprallelement 15 kann ebenfalls ein im Wesentlichen U-förmiges Profil aufweisen, dessen gegenüberliegende Wände mit der Innenseite des Blechaußenteils 4 durch eine bekannte Verbindungstechnik, wie Schweißen, Verkleben oder Nieten verbunden sind. Das Vorderprallelement 15 kann aus einem Blechteil gefertigt werden und kann auch in einem kostengünstigen Massenverfahren beispielsweise durch Walzprofilierung oder durch Strangpressprofilierung hergestellt werden. Als Material für Vorderprallelement 15 können sowohl Stahlwerkstoffe als auch Leichtmetallwerkstoffe, insbesondere Aluminium verwendet werden.

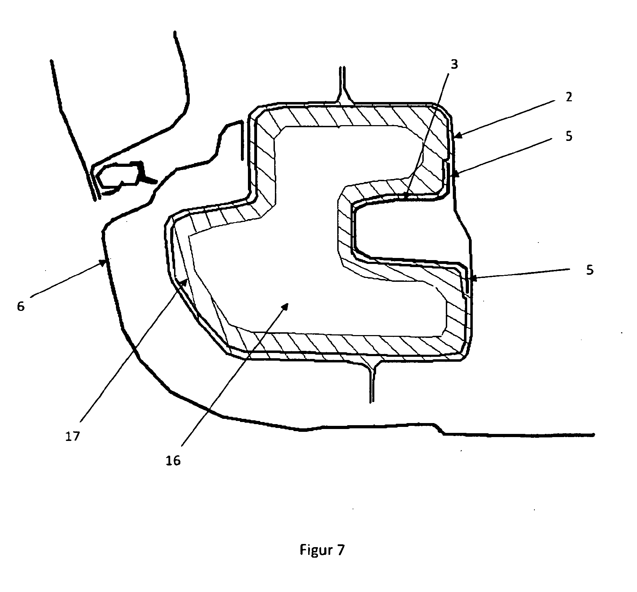

In der in Figur 2 gezeigten Fahrzeugkarosserie ist jeweils ein Abschottelement 16 zwischen dem mittigen Prallelement 7 und der B-Säule angeordnet. Die Abschottelemente 16 sind so ausgebildet, dass sie den Durchtritt von Flüssigkeiten und sonstigen Nässeelementen im Bereich zwischen dem Blechaußenteil 4 und dem Verstärkungsteil 3 in Fahrzeuglängsrichtung behindern. Die Abschottelemente 16 sind jeweils von einem Quellschaum 17 umgeben, wie aus der Figur 7 ersichtlich ist. Die Abschottelemente 16 tragen außerdem zur weiteren Aussteifung des gesamten Schwellers bei.

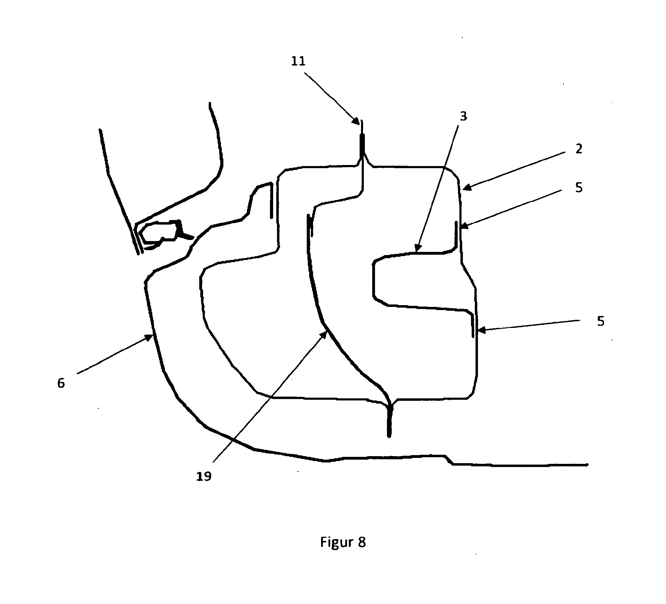

Die B-Säule 11 kann im Fuß ein Verstärkungselement 19 aufweisen, das im Schweller 1 zwischen dem Verstärkungsteil 3 und dem Blechaußenteil 4 angeordnet ist, wie aus den Figuren 2 und 8 ersichtlich ist.

Die vorhergehende Beschreibung der Ausführungsbeispiele gemäß der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

## Patentansprüche

1. Kraftfahrzeugkarosserie mit einem seitlichen Schweller (1), im Wesentlichen bestehend aus einem Blechinnenteil (2) und einem mit diesem verbundenen, nach außen abstehenden Blechaußenteil (4) und einem zwischen dem Blechinnenteil (2) und dem Blechaußenteil (4) angeordneten Verstärkungsteil (3), wobei sich der seitliche Schweller (1) und das Verstärkungsteil (3) zwischen einer A-Säule (10) und einer C-Säule (12) erstrecken, wobei ein oberes und ein unteres Ende des Blechinnenteils (2) mit einem oberen und einem unteren Ende des Blechaußenteils (4) verbunden ist, wobei das verstärkungsteil (3) in Fahrzeuglängsrichtung einen im Wesentlichen U-förmigen Querschnitt aufweist, wobei die freien Enden des Querschnitts des Verstärkungsteiles (3) mit Füßen (5) versehen sind, die beabstandet vom oberen und unteren Ende des Blechinnenteiles (2) bzw. des Blechaußenteiles (4) mit dem Blechinnenteil (2) verbunden sind, dass zwischen dem Blechaußenteil (4) und dem Verstärkungsteil (3) zur Übertragung von seitlichen Aufprallkräften mindestens ein einen U-förmigen Querschnitt aufweisendes und vertikal ausgerichtetes Prallelement (7) vorgesehen ist, wobei ein Bodenteil (14) des U-förmigen Prallelements (7) an dem Verstärkungsteil (3) anliegt, während die freien Enden (8) der gegenüberliegenden Wände des U-förmigen Prallelements (7) der Kontur des Blechaußenteils (4) angepasst und mit dem Blechaußenteil (4) verbunden sind.

2. Kraftfahrzeugkarosserie nach Anspruch 1, **dadurch gekennzeichnet, dass** das Prallelement (7) zwischen der A-Säule (10) und einer B-Säule (11) angeordnet ist und ein weiteres Prallelement (7) zwischen der B-Säule (11) und der C-Säule (12) angeordnet ist.

3. Kraftfahrzeugkarosserie nach Anspruch 1, **dadurch gekennzeichnet, dass** die gegenüberliegenden Wände des U-förmigen Querschnitts des Prallelements (7) jeweils mindestens einen zu der jeweiligen Wand lotrechten Fuß (9) aufweisen, der durch Schweißen mit dem Blechaußenteil (4) verbunden ist.

4. Kraftfahrzeugkarosserie nach den Ansprüchen 1 oder 2, **dadurch gekennzeichnet, dass** das mindestens eine Prallelement (7) in Längsrichtung des Schwellers (1) zwischen einem Vorderprallelement (15) und einem Abschottelement (16) angeordnet ist.

## Claims

1. Motor vehicle body with a side sill (1), essentially consisting of a sheet-metal inner part (2) and an outwardly protruding sheet-metal outer part (4) which is connected to the latter, and a reinforcing part (3) arranged between the sheet-metal inner part (2) and the sheet-metal outer part (4), wherein the side sill (1) and the reinforcing part (3) extend between an A pillar (10) and a C pillar (12), wherein an upper and a lower end of the sheet-metal inner part (2) is connected to an upper and a lower end of the sheet-metal outer part (4), wherein the reinforcing part (3) has a substantially U-shaped cross section in the longitudinal direction of the vehicle, wherein the free ends of the cross section of the reinforcing part (3) are provided with feet (5) which are connected to the sheet-metal inner part (2) at a distance from the upper and lower ends of the sheet-metal inner part (2) and of the sheet-metal outer part (4), wherein at least one impact element (7) which has a U-shaped cross section and is vertically oriented is provided between the sheet-metal outer part (4) and the reinforcing part (3) in order to transmit lateral impact forces, and wherein a bottom part (14) of the U-shaped impact element (7) bears against the reinforcing part (3) while the free ends (8) of the opposite walls of the U-shaped impact element (7) are matched to the contour of the sheet-metal outer part (4) and are connected to the sheet-metal outer part (4).

2. Motor vehicle body according to Claim 1, **characterized in that** the impact element (7) is arranged between the A pillar (10) and a B pillar (11) and a further impact element (7) is arranged between the B pillar (11) and the C pillar (12).

3. Motor vehicle body according to Claim 1, **characterized in that** the opposite walls of the U-shaped cross section of the impact element (7) each have at least one foot (9) which is perpendicular to the respective wall and is connected to the sheet-metal outer part (4) by welding.

4. Motor vehicle body according to Claims 1 or 2, **characterized in that** the at least one impact element (7) is arranged in the longitudinal direction of the sill (1) between a front impact element (15) and a bulkhead element (16).

## Revendications

1. Carrosserie de véhicule automobile dotée de longerons latéraux (1), pour l'essentiel composés d'une partie intérieure de tôle (2) et d'une partie extérieure de tôle (4) reliée à elle, saillant vers l'extérieur et d'une partie de renfort (3) disposée entre la partie intérieure de tôle (2) et la partie extérieure de tôle (4), le longeron latéral (1) et la partie de renfort (3) s'étendant entre un montant A (10) et un montant C (12), une extrémité supérieure et une extrémité inférieure de la partie intérieure de tôle (2) étant reliées à une extrémité supérieure et une extrémité inférieure de la partie extérieure de tôle (4), la partie de renfort (3) comportant dans la direction longitudinale du véhicule une section transversale pour l'essentiel en U, les extrémités libres de la section transversale de la partie (3) étant pourvues de pieds (5) reliés à la partie intérieure de tôle (2) et s'écartant de l'extrémité supérieure et inférieure de la partie intérieure de tôle (2) et/ou de la partie extérieure de tôle (4), au moins un élément pare-choc (7) comportant une section transversale en U orientée verticalement étant prévu entre la partie extérieure de tôle (4) et la partie de renfort (3) pour transmettre les forces de collision latérales, une partie de plancher (14) de l'élément pare-choc (7) en U reposant contre la partie de renfort (3) tandis que les extrémités libres (8) des parois opposées de l'élément pare-choc (7) en U adaptées au contour de la partie extérieure de tôles (4) sont reliées à la partie extérieure de tôle (4).

2. Carrosserie de véhicule automobile selon la revendication 1, **caractérisée en ce que** l'élément pare-choc (7) est disposé entre le montant A (10) et un montant B (11) et qu'un autre élément pare-choc (7) est disposé entre le montant B (11) et le montant C (12).

3. Carrosserie de véhicule automobile selon la revendication 1, **caractérisée en ce que** les parois opposées de la section transversale en U de l'élément pare-choc (7) comportent respectivement au moins un pied (9) perpendiculaire à la paroi respective reliée par soudage à la partie extérieure de tôle (4).

4. Carrosserie de véhicule automobile selon les revendications 1 ou 2, **caractérisée en ce que** l'au moins un élément pare-choc (7) est disposé dans la direction longitudinale du longeron (1) entre un élément pare-choc avant (15) et un élément de cloisonnement (16).
